Europäisches Patentamt

European Patent Office

Office européen des brevets

(19)

(11) Numéro de publication: **0 044 263**
**B1**

(12) # FASCICULE DE BREVET EUROPEEN

(45) Date de publication du fascicule du brevet:
02.10.85

(51) Int. Cl.⁴: **F 15 B 9/03**, G 05 D 3/18

(21) Numéro de dépôt: **81440017.2**

(22) Date de dépôt: **09.06.81**

(54) **Convertisseur courant-débit à réponse rapide, notamment pour l'asservissement de dispositifs de manoeuvre ou de distribution.**

(30) Priorité: **10.06.80 FR 8013347**

(43) Date de publication de la demande:
**20.01.82 Bulletin 82/3**

(45) Mention de la délivrance du brevet:
**02.10.85 Bulletin 85/40**

(84) Etats contractants désignés:
**AT BE CH DE GB IT LI LU NL SE**

(56) Documents cités:
**US - A - 3 279 323**
**US - A - 3 295 421**
**US - A - 3 521 535**
**US - A - 3 659 631**
**US - A - 3 740 588**
**US - A - 4 015 426**

(73) Titulaire: **Guettmann, Pierre, 16, rue du Colonel Fabien,
F-54310 Homecourt (FR)**

(72) Inventeur: **Guettmann, Pierre, 16, rue du Colonel Fabien,
F-54310 Homecourt (FR)**

(74) Mandataire: **Nuss, Pierre, 10, rue Jacques Kablé,
F-67000 Strasbourg (FR)**

BUNDESDRUCKEREI BERLIN

## Description

La présente invention concerne le domaine de l'asservissement de dispositifs de manoeuvre de charges, ou autres, ou de dispositifs de distribution, et a pour objet un convertisseur courant-débit à réponse rapide destiné à cet effet.

Actuellement, les problèmes d'asservissement, tant pneumatique qu'hydraulique, de dispositifs de manoeuvre, ou de dispositif de distribution, sont rendus possibles par l'utilisation de convertisseurs dans lesquels, à une grandeur d'entrée électrique donnée doit correspondre une pressioin ou un débit proportionnel. Dans de tels convertisseurs courant-débit sont généralement utilisés deux paramètres, à savoir, la pression d'alimentation, et la section de passage. Le débit d'air, ou l'interruption de ce débit, en direction du récepteur peuvent être réalisés, soit au moyen de vannes à fonctionnement analogique du type robinet, permettant une variation à l'infini du débit entre un maximum et un minimum, soit au moyen de vannes à fonctionnement logique du type électrovanne dont le débit est total ou nul suivant la position.

L'utilisation de vannes motorisées permet une monoeuvre de charge, par exemple pour un déplacement, très précise, le débit pouvant être réglé par étranglement au moyen d'un moteur électrique agissant par l'intermédiaire d'un réducteur sur la vanne. Cependant, ce mode d'asservissement présente un temps de réponse relativement long ayant pour conséquence une inertie importante, de sorte que les variations brutales de débit sont pratiquement irréalisables.

Il est également connu de réaliser un asservissement sensiblement analogique d'un dispositif de manoeuvre, ou de distribution, à partir d'électrovannes, qui sont des distributeurs logiques. A cet effet, plusieurs électrovannes ayant des débits différents, donc des diamètres de passage différents, sont regroupées en un groupe de distribution permettant l'obtention de plusieurs débits variant avec la ou les électrovannes utilisées. Cependant, le nombre de vitesses de manoeuvre possibles est directement fonction du nombre d'électrovannes employées, de sorte que pour une conversion relativement fine des débits, et donc des vitesses, le groupe de distribution devient relativement important, chaque électrovanne étant généralement suivie d'un étrangleur réglable.

Pour la manoeuvre d'une charge sur un parcours linéaire, par exemple au moyen d'un vérin commandé par une électrovanne, l'interruption du déplacement du vérin, donc de son alimentation par l'électrovanne est commandée par un contact de fin de course actionné par la charge. Cependant, lorsque la charge agit sur le contact de fin de course, elle est douée d'une certaine vitesse et présente donc une certaine inertie due à sa masse, de sorte qu'elle dépasse sa position d'arrêt déterminée par ledit contact de fin de course. Il est donc nécessaire d'avancer le contact de fin de course pour anticiper l'arrêt de la charge. Un tel réglage empirique donne de bons résultats en laboratoire, mais ne peut être utilisé dans la pratique du fait des fluctuations possibles de la masse de la charge, ou de la pression d'alimentation. Une manoeuvre avec arrêt précis est possible en utilisant au moins deux électrovannes pour chaque sens de déplacements, à savoir une grosse électrovanne pour les déplacements rapides d'approche, et une petite électrovanne ou une électrovanne étranglée pour un arrêt précis à très petite vitesse. Cependant, notamment dans le cas d'un déplacement en va-et-vient, le dispositif d'asservissement devient relativement encombrant, et le réglage des contacts de fin de course devient difficile.

Il est possible d'obvier à cet inconvénient en remplaçant les contacts de fin de course par des capteurs analogiques de déplacement, qui donnent à tout moment une indication de position du mobile à déplacer sous forme d'une information électrique. La commande automatique des électrovannes est alors réalisée au moyen d'un amplificateur opérationnel différentiel, qui effectue la différence entre une information électrique de consigne correspondant à la position requise du mobile et une information électrique provenant du capteur de position, correspondant à la position réelle instantanée du mobile. En présence d'un écart plus ou moins important entre les valeurs de consigne et de position réelle, la sortie de l'amplificateur commande, dans un sens de déplacement ou dans l'autre, l'une ou plusieurs des électrovannes concernées, afin de manoeuvrer le vérin en vue d'une réduction dudit écart, cette manoeuvre s'effectuant automatiquement, même en présence d'effets parasites extérieurs.

Toutefois, ce mode d'asservissement entièrement électronique, en dehors du fait qu'il est relativement onéreux, ne permet pas d'obtenir un grand nombre de vitesses de manoeuvre, et occasionne ainsi un battement lors de la manoeuvre (»pompage«).

Il est connu, par ailleurs, par le US-A-3 521 535, un mécanisme de réglage de position actionné pneumatiquement et modulé dans le temps. Ce mécanisme permet d'obtenir uniquement un décrochage des électrovannes, c'est-à-dire un léger décollement du clapet de son siège, au moyen d'un courant continu pulsé facilement réglable. Mais, du fait de la technologie de clapet employée, il résulte une imprécision de fonctionnement et corollairement le mécanisme de réglage ne peut pas être appliqué pour le positionnement précis de pièces. D'autre part, le système d'alimentation ne peut pas être désolidarisé de l'organe de manoeuvre et le mécanisme décrit ne peut être utilisé qu'en servo-positionneur. Enfin, le noyau de ce dispositif connu, compte tenu de son poids, ne peut travailler à une fréquence élevée sur toute sa course.

On connaît également, par le US-A-3 295 421, un circuit de réglage dont le positionnement a lieu par actionnement de deux électrovannes commandées électroniquement. Ce dispositif met en oeuvre des électrovannes qui ne permettent cependant pas un fonctionnement rapide, ainsi qu'un servo-positionneur, et un réglage d'un débit en fonction d'un courant donné n'est pas possible.

En outre, le brevet US-A-4 015 426 décrit un dispositif de commande de débit de liquide à faible viscosité tel que du carburant. Dans ce dispositif, un débit régulier à la buse ne peut être obtenu, des pulsations notables et inévitables se produisant du fait de l'incompressibilité des liquides. L'électrovanne utilisée dans ce dispositif fonctionne donc à une fréquence de commutation relativement faible, les pulsations étant sans incidence notable sur l'effet recherché dans le cas d'une injection de carburant liquide, à savoir l'obtention d'une température ou d'une puissance.

Enfin, dans le cas d'utilisation de fluides compressibles, en particulier gazeux, les pulsations, dues aux électrovannes à fréquence relativement faible utilisées dans les dispositifs précités, rendent quasiment impossible un contrôle précis du débit.

La présente invention a pour but de pallier ces inconvénients.

Elle a, en effet pour objet un convertisseur courant-débit à réponse rapide pour doser un débit de fluide, en particulier gazeux, vers un organe récepteur, notamment un dispositif de manoeuvre de charges, tel qu'un vérin ou un dispositif de distribution; ledit convertisseur étant constitué par plusieurs électrovannes commandées chacune par un organe de commande électronique et raccordées par leur orifice d'entrée à un réservoir à fluide sous pression et par orifice de sortie à l'organe récepteur; et par un organe, mesurant un paramètre qui est proportionnel au débit, notamment un capteur de position relié mécaniquement au dispositif de manoeuvre ou un débitmètre; la sortie de l'organe capteur est reliée à une entrée d'un comparateur dont l'autre entrée est connectée à un organe donneur de signal de consigne, ce comparateur fournissant une tension, qui est fonction directe de la différence entre valeur de consigne et valeur réelle; ledit convertisseur comporte de plus un générateur de dents de scie relié à un détecteur de seuil qui est connecté à la sortie du comparateur, et qui compare le signal issu du générateur de dents de scie avec celui issu du comparateur et fournit un signal de créneaux à rapport cyclique, caractérisé en ce que les électrovannes présentent une fréquence de commutation rapide, de l'ordre de 100 Hz, en ce qu'un circuit de déphasage est prévu pour chaque électrovanne à l'exception de la première électrovanne, les entrées de l'organe de commande électronique de la première électrovanne et des circuits de déphasage étant reliées à la sortie de détecteur de seuil par un point de raccordement commun, et en ce que les organes de commande électroniques affectés aux électrovannes présentent à l'alimentation à découpage des électrovannes un décalage égal à $\frac{2\pi}{n}$, n représentant le nombre d'électrovannes utilisées.

L'invention sera mieux comprise grâce à la description ci-après, qui se rapporte à un mode de réalisation préféré, donné à titre d'exemple non limitatif, et expliqué avec référence aux dessins schématiques annexés, dans lesquels:

la figure 1 est un schéma par blocs d'un dispositif conforme à l'invention, et

la figure 2 est un schéma explicatif du facteur de marche.

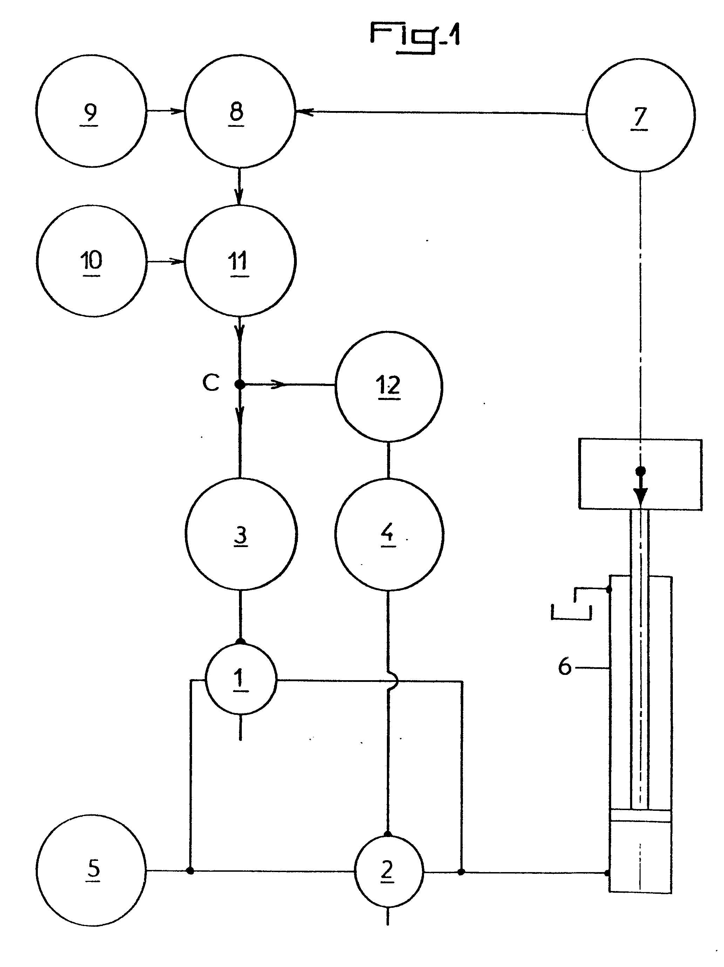

Conformément à l'invention, et comme le montre, à titre d'exemple, la figure 1 des dessins annexés, le convertisseur courant-débit à réponse rapide pour doser un débit de fluide, en particulier gazeux, vers un organe récepteur 6, notamment un dispositif de manoeuvre de charges, tel qu'un vérin ou un dispositif de distribution, et, qui est essentiellement constitué par des électrovannes 1 et 2 commandées chacune par un organe de commande électronique 3 et 4, et raccordées par leur orifice d'entrée à un réservoir à fluide sous pression 5, tel qu'un réservoir à air comprimé, et par l'un de leurs orifices de sortie à l'organe récepteur 6; et par un organe capteur 7 mesurant un paramètre qui est proportionnel au débit, en particulier un capteur de position relié mécaniquement au dispositif de manoeuvre ou un débitmètre, la sortie de ce capteur étant reliée à une entrée d'un comparateur 8, dont l'autre entrée est connectée à un organe 9 donneur de signal de consigne, ce comparateur 8 fournissant une tension, qui est fonction directe de la différence entre valeur de consigne et valeur réelle; ledit convertisseur comportant de plus un générateur de dents de scie 10 relié à un détecteur de seuil 11 qui est connecté à la sortie du comparateur 8, et qui compare le signal issu du générateur de dents de scie 10 avec celui issu du comparateur 8 et fournit un signal de créneaux à rapport cyclique, est caractérisé en ce que les électrovannes 1, 2 présentent une fréquence de commutation rapide de l'ordre de 100 Hz, en ce qu'un circuit de déphasage 12 est prévu pour chaque électrovanne à l'exception de la première électrovanne 1, les entrées de l'organe de commande électronique 3 de la première électrovanne 1 et des circuits de déphasage 12 étant reliées à la sortie du détecteur de seuil 11 par un point de raccordement commun C, et en ce que les organes de commande électroniques 3, 4 affectés aux électrovannes 1, 2 présentent à l'alimentation à découpage des électrovannes un décalage de $\frac{2\pi}{n}$, n représentant le nombre d'électrovannes utilisées.

Les électrovannes sont dépourvues chacune de bague conductrice concentrique à l'enroulement, et de tube amagnétique étanche déphasant ou affaiblissant le champ magnétique créé par la bobine. Chaque électrovanne est pourvue, en outre, d'un noyau dont la masse est ajustée pour permettre un effet optimal, tant du point de vue magnétique qu'inertiel, et est alimentée par un circuit à découpage qui donne des impulsions sensiblement carrées, par l'intermédiaire de l'organe de commande électronique 3, 4 qui lui est affecté.

Le débit des électrovannes 1 et 2 peut être varié par variation de leur facteur de marche, c'est-à-dire en les faisant fonctionner pendant un intervalle de temps déterminé, puis en les laissant au repos pendant un autre intervalle de temps. Ainsi, en considérant une électrovanne deux voies — deux positions, cette dernière présente deux états possibles, à savoir un débit nul au repos, et un débit nominal en action. Lors d'une commande manuelle avec un temps de travail suivi d'un temps de repos de même durée, son débit moyen sera de 50% et fortement pulsé, de sorte qu'il sera fonction du facteur de marche ou du facteur de forme du courant de commande. Jusqu'à présent cette variation possible du débit était cependant accompagnée de pulsations sensibles de l'organe de manoeuvre de charge, du fait que les temps de commutation étaient relativement longs. Les électrovannes 1 et 2 selon l'invention permettent de pallier cet inconvénient du fait qu'elles présentent une fréquence de commutation élevée, de l'ordre de 100 Hz, par leur enroulement alimenté, en transitoire, par l'intermédiaire des organes de commande électroniques 3 et 4, et par un circuit à découpage donnant des impulsions sensiblement carrées, donc un front de montée rapide favorisant une réponse rapide du noyau.

Les pulsations de débits sont notablement nivelées par une commutation rapide du noyau, et les pulsations résiduelles sont sans effet sur les récepteurs désservis.

La conversion courant-débit est possible à deux conditions, à savoir un débit régulier ou très faiblement pulsé, et une large plage de débits, et pour satisfaire ces conditions l'invention propose plusieurs solutions:

— faire vibrer le noyau d'électrovanne sur toute sa course
— à la fréquence utilisée le noyau obéit au facteur de forme du courant de commande
— plusieurs électrovannes sont utilisées en parallèle.

Pour une fréquence de commutation rapide l'enroulement sera plus puissant que la normale, et la masse de noyau sera ajustée pour permettre des effets magnétiques et inertiels optimaux.

La croissance du champ magnétique devant être élevée, une forme d'onde à fronts raides est indispensable, l'onde carrée convenant parfaitement malgré sa richesse en harmoniques.

Afin de ne pas déphaser ou affaiblir le champ magnétique créé par l'enroulement, l'électrovanne n'est pas pourvue d'anneau de déphasage concentrique à son enroulement, ni d'un tube magnétique étanche.

L'accroissement de fréquence entraîne une réduction de la plage de débits, qui devient si étroite que le réglage pointu est instable.

Il s'ensuit que l'accroissement de fréquence provoque l'accroissement des pertes fer au sein du circuit magnétique.

Une fréquence voisine de 100 Hz est donc optimale pour le fonctionnement, permettant une plage de débits importante, proche de 100%, avec une pulsation de débit faible.

Il est nécessaire d'alimenter les électrovannes 1 et 2 au moyen d'un circuit à découpage délivrant des impulsions sensiblement carrées, de manière à favoriser la croissance rapide du courant, donc du champ magnétique, au sein de ces électrovannes, dans provoquer trop de pertes fer.

En outre, du fait de l'augmentation de la fréquence, la cadence de commutation augmente, et les vibrations peu sensibles qui subsistent sont annihilées du fait de l'inertie du vérin. En fonctionnement avec une électrovanne 3 voies — 2 positions, pour un facteur de marche voisin de 50%, et une fréquence élevée, le vérin et la charge restent stationnaires. Si le facteur de marche augmente, le vérin sort à une vitesse qui s'accroît avec le facteur de marche, tandis que si ce dernier diminue es dessous de 50%, le vérin sous charge rentre à une vitesse qui s'accroît en correspondance avec la diminution dudit facteur de marche.

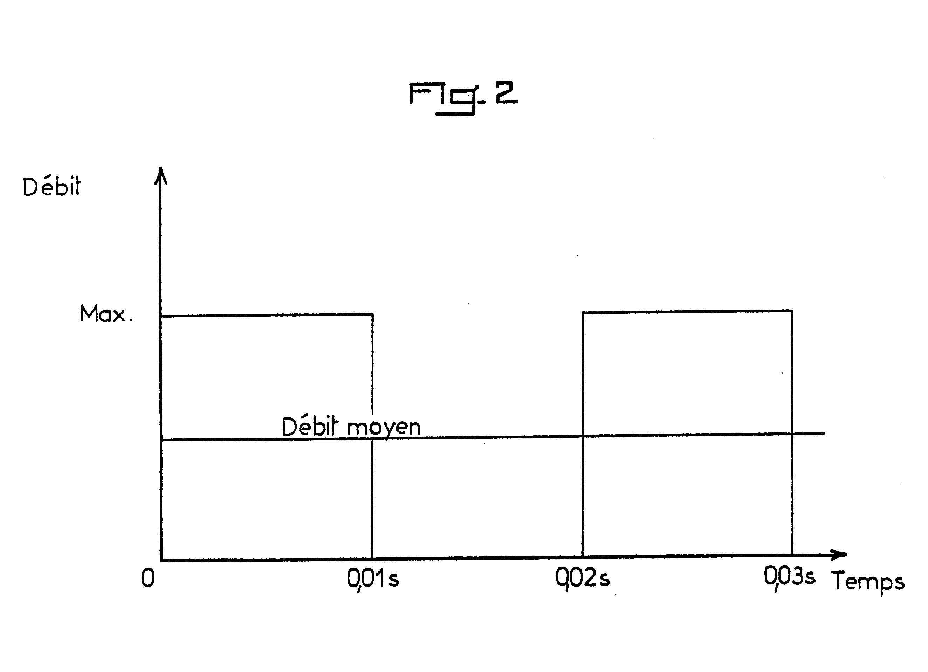

La figure 2 représente un cycle de fonctionnement d'une électrovanne. En considérant qu'un tel cycle s'étende sur 0,02 seconde, et que dans ce cycle l'électrovanne travaille à pleine puissance pendant 0,01 seconde, c'est-à-dire pendant la moitié du cycle, et soit au repos pendant l'autre moitié, le débit moyen de l'électrovanne sur le cycle sera de 50%, l'électrovanne présentera donc un facteur de marche de 50%.

Bien entendu, les explications ci-dessus ne tiennent pas compte des diverses pertes mécaniques, le facteur de marche pouvant légèrement varier autour de la valeur prédéterminée.

Ce facteur de marche se règle automatiquement à partir de la valeur de consigne issue de l'organe 9 et de la valeur de position issue du capteur 7 par le comparateur 8, et la fréquence de fonctionnement des électrovannes 1 et 2 est donnée par le générateur de dents de scie 10 préalablement ajusté.

Les pulsations ou vibrations résiduelles subsistantes peuvent être éliminées, conformément à l'invention, par la prévision de plusieurs électrovannes montées en parallèle, dont les entrées et les sorties sont reliées ensemble, mais dont les organes de commande électroniques 3 et 4 présentent un décalage à l'alimentation égal à $\frac{2\pi}{n}$, n représentant le nombre d'électrovannes utilisées, et ce décalage est obtenu grâce à un circuit de déphasage 12 équipant chaque électrovanne supplémentaire, et la sortie du détecteur 11 délivre alors un créneau à rapport cyclique représenté par le point C à l'entrée de chaque circuit 12 et à l'organe de commande 3 y affecté.

Conformément à une caractéristique de l'invention, dans le cas de l'asservissement à l'aide de vérins, la ou les électrovannes utilisées sont du type 3 voies — 2 positions, avec échappement à l'atmosphère.

Selon une autre caractéristique de l'invention, pour l'asservissement de dispositifs de distribution, les électrovannes utilisées sont du type 2 voies — 2 positions.

Pour manoeuvrer un vérin dont le piston est rappelé par sa charge ou par ressort, l'électrovanne alimentant celui-ci sera toujours de type 3 voies — 2 positions mais cette fois à échappement libre à l'atmosphère. Le vérin ayant un facteur de charge de 50% la moitié de la pression du fluide comprimé sera suffisante à le manoeuvrer. Ainsi,

— un facteur de marche de 100% fera sortir le piston très rapidement, le remplissage de la chambre est total,

— un facteur de marche nul fera rentrer le piston rapidement, la vidange de la chambre est totale,

— à mi-course, le piston chargé sera maintenu en cette position intermédiaire par un facteur de marche de l'électrovanne d'environ 20%.

Il en résulte que la chambre du vérin recevra successivement un remplissage partiel (20%) suivi d'une purge partielle ou vidange partielle (80%).

Il est à noter que la vitesse de retour du piston est inférieure à la vitesse de sortie du fait que la pression du fluide d'alimentation est double de celle dans la chambre du vérin.

Le fonctionnement du dispositif représenté aux dessins annexés s'effectue de la manière suivante:

Lors de la mise en marche du dispositif, le capteur 7 délivre une valeur de position réelle qui est transmise au comparateur 8, qui fournit une tension, qui est fonction directe de la différence entre une valeur de consigne donnée par l'organe 9 et la valeur de position. Cette tension est comparée dans le détecteur de seuil 11 avec les dents de scie fournies par le générateur 10, et le signal de sortie du détecteur 11 est transmis, comme signal de commande, à l'organe 3 de commande de l'électrovanne 1, et, après passage par le circuit de déphasage 12, à l'organe 4 de commande de l'électrovanne 2, le détecteur 11 délivrant à l'entrée du circuit 12 et de l'organe de commande 3 un créneau à rapport cyclique représenté par le point C.

Conformement à une caractéristique de l'invention, il est également possible de réduire les pulsations ou vibrations, sans augmenter la fréquence d'alimentation des électrovannes, en multipliant celles-ci par n, et si le débit doit rester constant, en réduisant leur diamètre de passage par $\sqrt{n}$.

Il est également possible, selon une autre caractéristique de l'invention, de réaliser une conversion courantgros débit en reliant un vérin, commandé par les électrovannes du convertisseur, au tiroir de commande d'un gros distributeur, qui est ainsi piloté.

Grâce à l'invention, il est possible de réaliser un convertisseur courant-débit à réponse très rapide, permettant l'asservissement très précis de dispositifs de manoeuvre de charges, ou autres, tels que, notamment des boîtes de vitesse semi-automatiques de tracteurs routiers, et dont les vannes sont très simples et peuvent être facilement remplacées en cas de défaut. En outre, le dispositif présente une grande souplesse de fonctionnement, et une variation rapide du facteur de marche entre 0 et 100% est facilement réalisable, en particulier grâce aux électrovannes. Enfin, le dispositif conforme à l'invention est très fiable, les vannes fonctionnant très bien dans une plage de tempéature s'étendant de —20°C à +80°C, et les circuits électroniques, qui sont relativement simples, pouvant être déplacés pour leur protection.

En outre, grâce aux électrovannes conformes à l'invention, et à la variation du facteur de marche, il est possible de réaliser l'asservissement de dispositifs de distribution, par exemple de liquides ou de gaz, notamment dans le domaine de la chimie, en vue de la réalisation de mélanges de fluides, ou autres, avec un grand degré de précision, le capteur de position étant alors remplacé, par exemple, par un débitmètre.

**Revendications**

1. Convertisseur courant-débit à réponse rapide, pour doser un débit de fluide, en particulier gazeux, vers un organe récepteur (6), notamment un dispositif de manoeuvre de charges tel qu'un vérin, ou un dispositif de distribution; ledit convertisseur étant constitué par plusieurs électrovannes (1, 2) commandées chacune par un organe de commande électronique (3, 4) et raccordées par leur orifice d'entrée à un réservoir à fluide sous pression (5) et par orifice de sortie à l'organe récepteur (6); et par un organe capteur (7) mesurant un paramètre qui est propotionnel au débit, notamment un capteur de position relié mécaniquement au dispositif de manoeuvre (6) ou un débitmètre; la sortie de l'organe capteur (7) est reliée à une entrée d'un comparateur (8), dont l'autre entrée est connectée à un organe (9) donneur de signal de consigne, ce comparateur (8) fournissant une tension, qui est fonction directe de la différence entre valeur de consigne et valeur réelle; ledit convertisseur comporte de plus un générateur de dents de scie (10) relié à un détecteur de seuil (11) connecté à la sortie du comparateur (8), et qui compare le signal issu du générateur de dents de scie (10) avec celui issu du comparateur (8), et fournit un signal de créneaux à rapport cyclique, caractérisé en ce que les électrovannes (1, 2) présentent une fréquence de commutation rapide, de l'ordre de 100 Hz, en ce qu'un circuit de déphasage (12) est prévu pour chaque électrovanne (2) à l'exception de la première électrovanne, les entrées de l'organe de commande électronique (3) de la première électrovanne (1) et des circuits de déphasage (12) étant reliées à la sortie du détecteur de seuil (11) par un point de raccordement commun (C), et en ce que les organes de commande électroniques (3, 4) affectés aux électrovannes (1, 2) présentent à l'alimentation à découpage des électrovannes un décalage égal à $\frac{2\pi}{n}$, n représentant le nombre d'électrovannes utilisées.

2. Convertisseur, suivant la revendication 1, caractérisé en ce que pour l'asservissement pneumatique de vérins, les électrovannes (1, 2) utilisées sont du type 3 voies — 2 positions, avec échappement à l'atmosphère.

3. Convertisseur, suivant la revendication 1, caractérisé en ce que pour l'asservissement de dispositifs de distribution, les électrovannes (1, 2) utilisées sont du type 2 voies — 2 positions.

4. Convertisseur, suivant l'une quelconque des revendications 1 à 3, caractérisé en ce que les pulsations ou vibrations de débit peuvent être réduites, sans augmentation de la fréquence d'alimentation, en augmentant le nombre n d'électrovannes (1, 2), et si le débit doit rester constant, en réduisant leur diamètre de passage par $\sqrt{n}$.

5. Convertisseur, suivant l'une quelconque des revendications 1 à 4, caractérisé ce que, pour la conversion courant-gros débit, un vérin commandé par les électrovannes (1, 2) est relié au tiroir de commande d'un gros distributeur, qui est ainsi piloté.

**Patentansprüche**

1. Schnellansprechender Strömungsdurchfluß-Regler zur Dosierung eines Fluiddurchflusses, besonders eines gasförmigen Mediums, zu einem Verbraucherorgan (6), insbesondere zu einer unter Last stehenden Steuereinrichtung wie z. B. einem Zylinder oder einer Verteilereinrichtung; wobei der besagte Regler aus mehreren Magnetventilen (1, 2) besteht, die jeweils von einem elektronischen Steuergerät (3, 4) betätigt werden und mit ihrer Eingangsöffnung an einem Fluiddruckbehälter (5) angeschlossen sind, und mit einer Ausgangsöffnung an dem Verbraucherorgan (6); und aus einem Sensororgan (7), das einen Kennwert mißt, der proportional zum Durchfluß ist, insbesondere aus einem Lagesensor, der mechanisch mit der Steuereinrichtung (6) oder einem Durchflußmesser verbunden ist; der Ausgang des Sensororgans (7) ist mit dem Eingang eines Komparators (8) verbunden, dessen anderer Eingang an ein Organ (9) zur Sollwertgebung angeschlossen ist, wobei der Komparator (8) eine Spanung liefert, die proportional von der Differenz zwischen Sollwert und Istwert abhängig ist; der besagte Regler weist außerdem einen Sägezahngenerator auf (10), der mit einem Schwellenwertdetektor (11) verbunden ist, welcher an den Ausgang des Komparators (8) angeschlossen ist und der das von dem Sägezahngenerator (10) ausgesendete Signal mit dem von dem Komparator (8) ausgesendeten vergleicht und einen Rechteckimpuls mit zyklischem Verhältniswert liefert, dadurch gekennzeichnet, daß die Magnetventile (1, 2) eine Schnellumschaltfrequenz von 100 Hz aufweisen, daß ein Phasenschieberkreis (12) für jedes Magnetventil (2) vorgesehen ist, außer für das erste Magnetventil, wobei die Eingänge der elektronischen Steuereinrichtung (3) des ersten Magnetventils (1) und der Phasenschieberkreise (12) mit dem Ausgang des Schwellenwertdetektors (11) durch einen gemeinsamen Anschlußpunkt (C), verbunden sind, und daß die elektronischen Steuereinrichtungen (3, 4), die den Magnetventilen (1, 2) zugeordnet sind, bei der Stroboimpulsveränderung der Magnetventile eine Verschiebung gleich $\frac{2\pi}{n}$ aufweisen, wobei n die Zahl der verwendeten Magnetventile darstellt.

2. Regler nach Anspruch 1, dadurch gekennzeichnet, daß zur pneumatischen Steuerung von Zylindern die verwendeten Magnetventile (1, 2) der 3-Wege — 2-Punkt-Bauart mit Auslaß an die Atmosphäre entsprechen.

3. Regler nach Anspruch 1, dadurch gekennzeichnet, daß für die Steuerregelung der Verteilereinrichtungen die verwendeten Magnetventile (1, 2) der 2-Wege — 2-Punkt-Bauart entsprechen.

4. Regler nach einem der Ansprüche 1 bis 3, dadurch gekennzeichnet, daß die Durchflußschwingungen oder -vibrationen vermindert sein können, ohne Steigerung der Eingangsfrequenz, durch Erhöhung der Zahl n der Magnetventile (1, 2), und wenn der Durchfluß konstant bleiben soll, durch Verkleinern ihres Durchgangsdurchmessers durch $\sqrt{n}$.

5. Regler nach einem der Ansprüche 1 bis 4, dadurch gekennzeichnet, daß zur Wandlung des Hauptströmungsdurchflusses ein Zylinder, der von den Magnetventilen (1, 2) gesteuert wird, mit dem Steuerschieber eines Hauptverteilers verbunden ist, der auf diese Weise servogesteuert wird.

**Claims**

1. Rapid response current-flow converter for dosing a fluid flow and particularly a gaseous flow to a receiving means (6), particularly a load handling means such as a jack, or a distribution device; said converter comprising several electro-valves (1, 2) each controlled by an electronic control means (3, 4) and connected by their inlet to a pressurized fluid reservoir (5) and by their outlet to receiving means (6); and by a sensor means (7) measuring a parameter which is proportional to the flow, particularly a position sensor mechanically connected to the handling device (6) or a flow meter; the output of the sensor means (7) ist connected to one input of a comparator (8), whose other input is connected to a desired or reference signal supplying member (9) said comparator (8) supplying a voltage which is a direct function of the difference between the desired value and the real value; said converter also having a saw tooth generator (10) connected to a threshold detector (11) connected to the output of the comparator (8) and which compares the signal form the saw tooth generator (10) with that from the comparator (8) and supplies a cyclical ration square wave signal, characterised in that the electro-valves (1, 2) have a fast switching frequency of approximately 100 Hz, that a phase shifting circuit (12) is provided for each electro-valve (2), excepting the first electro-valve, the inputs of these first electronic control means of the first electro-valve (1) and the phase shifting circuits (12) being connected to the output of the threshold detector (11) by a common connection point (C) and that the electronic control means (3, 4) allocated to the electro-valves (1, 2) have, at the electro-valve cut-off supply, a shift equal to $\frac{2\pi}{n}$, n representing the number of electro-valves used.

2. Converter according to claim 1, characterized in that for the pneumatic servo-control of jacks, the electro-valves (1, 2) used are of the 3-way/2-position type with escape to the atmosphere.

3. Converter according to claim 1, characterized in that for the servo-control of the distribution means the electro-valves (1, 2) used are of the 2-way/2-position type.

4. Converter according to any one of the claims 1 to 3, characterized in that the pulsations or vibrations of the flow can be reduced, without increasing the supply frequency, by increasing the number n of electro-valves (1, 2) and if the flow rate ist to remain constant by reducing their passage diameter by $\sqrt{n}$.

5. Converter according to any one of the claims 1 to 4, characterized in that for current high-flow rate conversion, a jack controlled by the electro-valves (1, 2) is connected to the control slide valve of a large distributor, which is in this way controlled.

Fig.1

Fig. 2